# EUROPEAN PATENT APPLICATION

(11) **EP 4 717 510 A1**
(43) Date of publication of application: **01.04.2026**
(21) Application number: 25204689.1
(22) Date of filing: 25.09.2025
(51) Int. Cl.: B60L 53/16, H01R 4/02

(54) **CHARGING INLET**

(30) Priority: 30.09.2024 US 202463701097 P; 22.09.2025 US 202519335055
(71) Applicant: Aptiv Technologies AG, 8200 Schaffhausen (CH)
(72) Inventor: RASHILLA, Anthony, 8200 Schaffhausen (CH); LIER, Troy, 8200 Schaffhausen (CH); MELLOTT, Michael, 8200 Schaffhausen (CH); HUDA, Thomas S., 8200 Schaffhausen (CH); BRAUN, Jesse, 8200 Schaffhausen (CH); BIZON, Don, 8200 Schaffhausen (CH); HANDEL, Jeffrey, 8200 Schaffhausen (CH); RICHARDS, Alexander, 8200 Schaffhausen (CH)
(74) Representative: Bardehle Pagenberg Partnerschaft mbB Patentanwälte Rechtsanwälte

(57) **Abstract**

A charging inlet (100) includes a positive conductor terminal (202) configured to interconnect with a positive inlet terminal (102) within an inlet housing (104) via a first fastener (116) and further configured to be fused to a positive conductor (402). The charging inlet (100) further includes a negative conductor terminal (206) configured to interconnect with a negative inlet terminal (106) within the inlet housing (104) via a second fastener (118) and further configured to be fused to a negative conductor (404).

## Description

The subject matter disclosed herein relates to a charging inlet and, in particular, to a charging inlet which is usable with bus bars or wire cables that are orientated in one of a plurality of different orientations relative to the charging inlet.

Prior charging inlets for electric vehicles, particularly those conforming with the Combined Charging Standard (SAE J1772), were generally very cumbersome and had a larger package size. Serviceability of these charging inlets was complicated and required removal of many pieces and parts from the electric vehicle to service the charging inlet. Many original equipment manufacturers (OEMs) of electric vehicles are seeking charging inlets that have a smaller/lower profile package, which provide the flexibility of connection to bus bar or wire cable conductors, and that are easily serviced by electric vehicle repair technicians.

In some aspects, the techniques described herein relate to a charging inlet including a positive conductor terminal configured to interconnect with a positive inlet terminal within an inlet housing of the charging inlet via a first fastener. The positive conductor terminal further is configured to be fused to a positive conductor. The charging inlet also includes a negative conductor terminal configured to interconnect with a negative inlet terminal within the inlet housing via a second fastener. The negative conductor terminal further is configured to be fused to a negative conductor.

In some aspects, the techniques described herein relate to a charging inlet, including an inlet housing and a ground terminal within the inlet housing interconnected to an electrically conductive feature by a ground conductor. The electrically conductive feature is configured to be attached to a chassis ground.
**FIGs. 1A and 1B** are side and front isometric views of a charging inlet according to some embodiments.
**FIG. 2** is an isolated isometric view of positive and negative connector terminals of the charging inlet of **FIG. 1A** according to some embodiments.
**FIGs. 3A and 3B** are isolated front and rear isometric views of a terminal housing of the charging inlet of **FIG. 1A** according to some embodiments.
**FIG. 4** is an isometric view of the charging inlet of **FIG. 1A** connected to round wire cables according to some embodiments.
**FIG. 5** is an isometric view of the charging inlet of **FIG. 1A** connected to rectangular bus bars according to some embodiments.
**FIG. 6** is an exploded isometric view showing alignment features of the terminal housing of **FIG. 3B** connected to rectangular bus bars according to some embodiments.
**FIGs. 7A** - **7D** are isometric views of charging inlets with various orientations of conductor dress according to some embodiments.

The present disclosure presents a charging inlet 100, for example a charging inlet used for interconnecting a battery pack of an electric vehicle to an electric vehicle battery charger. The charging inlet 100 illustrated herein conforms to the North American Charging Standard (NACS) described by the Society of Automotive Engineers (SAE) standard (J3400). However, other embodiments conforming to other charging inlet standards, such as SAE J1772, Combined Charging System (CCS), International Electrotechnical Commission (IEC) 62196, or CHAdeMO may also be utilized in combination with the present disclosure. Yet other embodiments of the charging inlet may be adapted for applications other than electric vehicle battery charging.

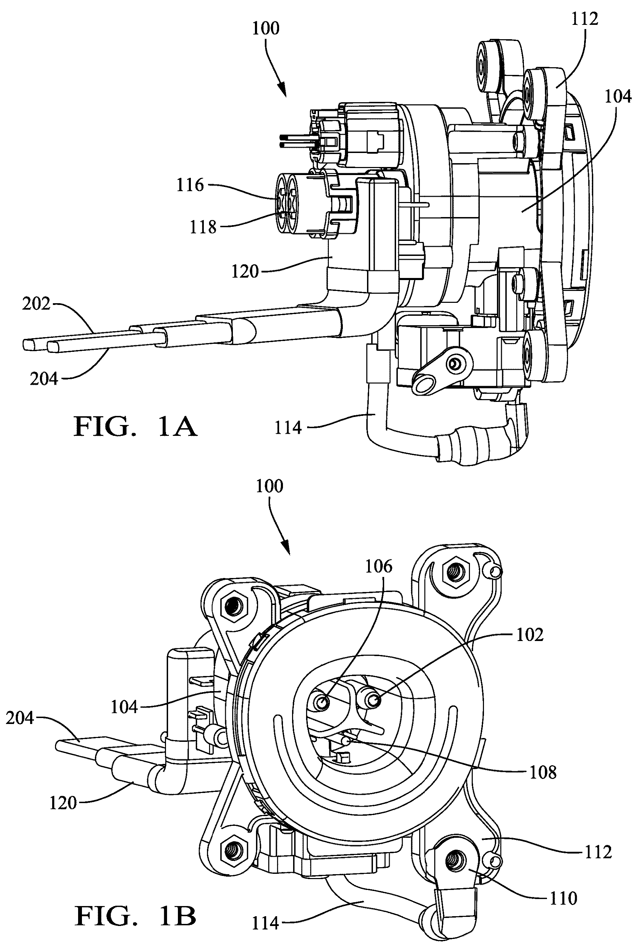

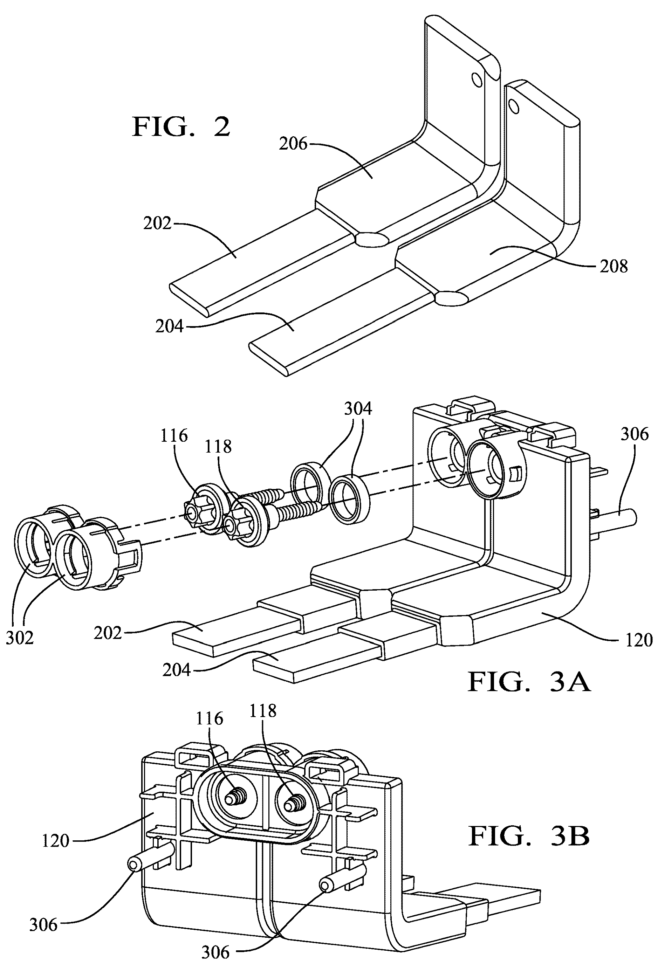

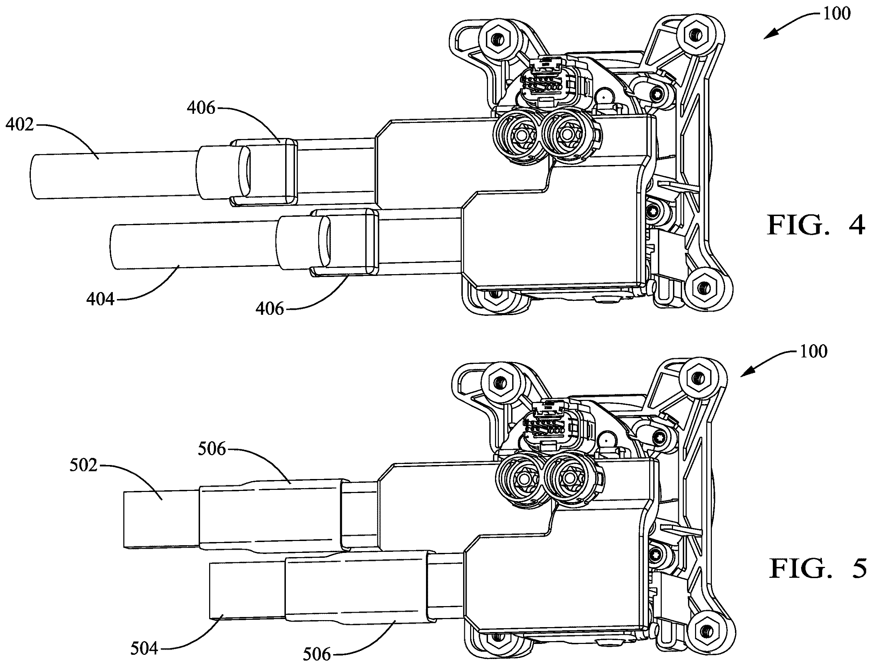

**FIGs. 1A and 1B** are side and front isometric views of a charging inlet 100 according to some embodiments. The charging inlet 100 contains a positive conductor terminal 202 (best shown in **FIG. 2**) that is configured to interconnect with a positive inlet terminal 102 (see **FIG. 1B**) within an inlet housing 104 of the charging inlet 100 via a first fastener 116 (best shown in **FIGs. 3A and 3B**). The positive connector terminal 202 is further configured to be fused to a positive conductor 402, 502 (see **FIGs. 4 and 5**). The charging inlet 100 also contains a negative conductor terminal 204 (best shown in **FIG. 2**) configured to interconnect with a negative inlet terminal 106 (see **FIG. 1B**) within the inlet housing 104 via a second fastener 118 (best shown in **FIGs. 3A and 3B**), the negative conductor terminal 204 is further configured to be fused to a negative conductor 404, 504 (see **FIGs. 4 and 5**).

As used herein, the term "fused" may refer to attachment by a welding process such as ultrasonic welding, friction welding, explosive welding, resistance welding, laser welding, electron beam welding, arc welding, gas welding, or thermit welding. The term "fused" may also refer to attachment by soldering or brazing as well as additive manufacturing processes (e.g., 3D printing).

In the non-limiting illustrated examples shown in **FIGs. 4 and 5****,** the positive and negative conductor terminals 202, 204 are welded to the positive and negative conductors 402, 502, 404, 504 using an ultrasonic welding process. In the example of **FIG. 4****,** the positive and negative conductors 402, 404 are flexible stranded wires that are welded to the positive and negative conductor terminals 202, 204. In the example of **FIG. 5****,** the positive and negative conductors, 502, 504 are rigid bus bars that are welded to the positive and negative conductor terminals 202, 204 using an ultrasonic welding process. In alternative embodiments, the positive and negative conductor terminals 202, 204 may be connected to both stranded wire cables and rigid bus bars, for example with the bus bars being fused to the top side of the positive and negative conductor terminals 202, 204 and the bus bars being fused to the bottom side of the positive and negative conductor terminals 202, 204.

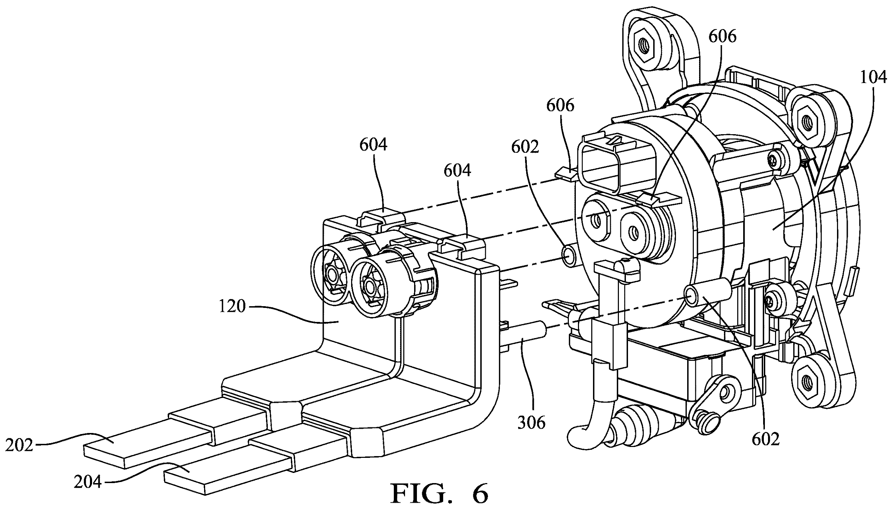

As shown in **FIGs. 3A and 3B****,** the positive and negative conductor terminals 202, 204 are at least partially contained within an electrically insulative terminal housing 120. The terminal housing 120 provides the benefit of spacing and aligning the positive and negative conductor terminals 202, 204 relative to each other, the positive and negative input terminals 102, 106, and the inlet housing 104. The terminal housing 120 comprises alignment features 306, 602 (see **FIGs. 3A, 3B****, and** **6**) that are configured to cooperate with corresponding alignment features in the inlet housing 104 to align the positive and negative conductor terminals 202, 204 with the positive and negative inlet terminals as shown in **FIG. 6****.** In the illustrated example, the alignment features 308 on the terminal housing 120 are a pair of posts extending from the terminal housing 120. The corresponding alignment features 602 in the inlet housing 104 are a corresponding pair of sockets in which the alignment features 308 (posts) are received. In alternative embodiments, the terminal housing 120 may contain the pair of sockets, and the terminal housing 120 may contain the pair or posts. At least a pair of alignment features is preferred since they can provide proper alignment in both the horizontal and vertical axes as the terminal housing 120 is moved relative to the inlet housing 104 along the longitudinal axis with the least effort in tooling and manufacturing.

As shown in **FIG. 4** the interfaces between the positive and negative conductor terminals 202, 204 and the stranded wire cables of the positive and negative conductors 402, 404 may be contained within an electrically insulative overmolded sheath 406. The electrically insulative overmolded sheath 406 may be formed by a low pressure hot melt material.

As shown in **FIG. 5** the interfaces between the positive and negative conductor terminals 202, 204 and the positive and negative conductors, 502, 504 (bus bars) may be contained within sections of dual wall/adhesive heat shrink tubing 506.

As best shown in **FIG. 6****,** the terminal housing 120 and the inlet housing 104 comprises locking features 604, 606 that are configured to cooperate to secure the terminal housing 120 to the inlet housing 104. The charging inlet 100 further includes retainers 302 that are configured to secure the first and second fasteners 116, 118 to the terminal housing 120. The charging inlet 100 also includes seals 304 within the retainers 302 configured to provide environmental sealing between the first and second fasteners 116, 118 and the terminal housing 120.

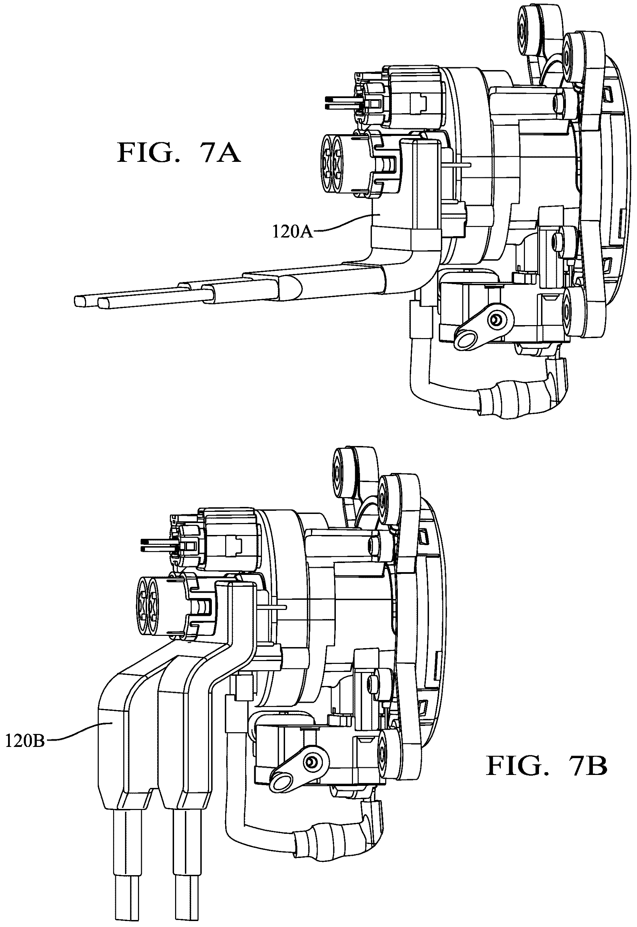

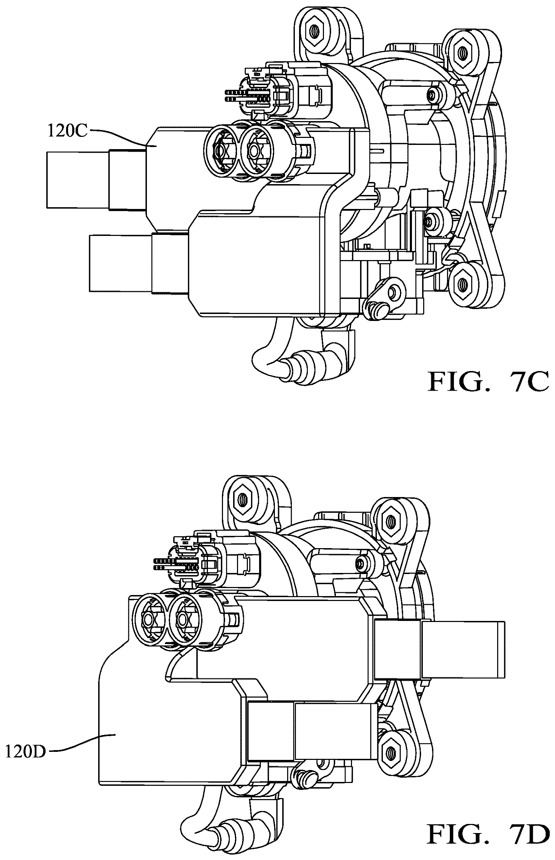

As shown in **FIGs. 7A to 7D****.** the terminal housing 120A-D can be configured to provide different wire dress configurations such as axial (see **FIG. 7A**), down (see **FIG. 7B**), left (see **FIG.7C**), and right (see **FIG. 7D**).

Returning to **FIGs. 1A and 1B****,** a ground terminal 108 within the inlet housing 104 is interconnected to an electrically conductive feature 110 in an inlet mounting plate 112 attached to the inlet housing 104. The electrically conductive feature 110 is configured to attach the inlet mounting plate 112 to a chassis of an electric vehicle. The ground terminal 108 may be interconnected to the electrically conductive feature by a stranded wire cable 114 as shown in **FIGs 1A and 1B****,** or the ground terminal may be interconnected to the electrically conductive feature by a rigid bus bar.

Returning again to **FIG. 2****,** the positive and negative conductor terminals 202, 204 have portions 206, 208 that are shaped, sized and arranged to provide a heat sink for the positive and negative inlet terminals 102, 106 in the charging inlet 100. This may allow the charging inlet 100 to operate at a higher power transmission level without exceeding the temperature limits of the charging inlet 100. In alternative embodiments, these portions 206, 206 may include fins to provide additional heat sinking.

The charging inlet 100 presented herein is designed to have a lower profile than prior art charging inlets, thereby reducing the size of the charging inlet 100 while providing many of the same features with a pluggable and serviceable charging inlet 100.

The charging inlet 100 described herein also allows for the charging inlet 100 to be treated as a device, thereby allowing copper or aluminum bus bar terminals, bus bars, or wire cables to be mated directly to the device.

The charging inlet 100 is designed to accommodate different wire/bus bar dress orientations without affecting other components.

The charging inlet 100 incorporates a flexible sealed ground option for right or left hand dress application and a co-molded connector housing with multiple indexing capabilities and touch proof fasteners.

The charging inlet 100 incorporates a common sealed connector for bus bar and/or traditional cable applications that includes a finger proof captured fastener and flexibility for dress orientation whether connected to a bus bar or bus bar terminal. The cable may be sonically welded to the bus bar terminals in any orientation, and a hot melt material may be applied to cover the weld and provide sealing of the welded interface. For bus bars, there may be no need to apply the hot melt for environmental sealing. Sealing is provided by a dual wall/adhesive heat shrink tube that seals the bus bar terminal to bus weld, while the co-molded connector housing provides a sealed connection/interface for the charging inlet 100. The multiple orientations of the cable/bus bar routing may be achieved by the bending/routing of the cable/bus bar per OEM requirements.

A co-molded cover to connector device incorporates a dock and lock feature and a captured fastener to aid assembly for ease of manufacturing.

While the invention has been described with reference to an exemplary embodiment(s), it will be understood by those skilled in the art that various changes may be made, and equivalents may be substituted for elements thereof without departing from the scope of the invention. In addition, many modifications may be made to configure a particular situation or material to the teachings of the invention without departing from the essential scope thereof. Therefore, it is intended that the invention is not limited to the disclosed embodiment(s), but that the invention will include all embodiments falling within the scope of the appended claims.

As used herein, 'one or more' includes a function being performed by one element, a function being performed by more than one element, e.g., in a distributed fashion, several functions being performed by one element, several functions being performed by several elements, or any combination of the above.

It will also be understood that, although the terms first, second, etc., are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an", and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Additionally, while terms of ordinance or orientation may be used herein these elements should not be limited by these terms. All terms of ordinance or orientation, unless stated otherwise, are used for purposes distinguishing one element from another, and do not denote any particular order, order of operations, direction or orientation unless stated otherwise.

### Discussion of Possible Embodiments

The following are non-exclusive descriptions of possible embodiments of the present invention.

In some aspects, the techniques described herein relate to a charging inlet including a positive conductor terminal configured to interconnect with a positive inlet terminal within an inlet housing of the charging inlet via a first fastener. The positive conductor terminal further is configured to be fused to a positive conductor. The charging inlet also incluides a negative conductor terminal configured to interconnect with a negative inlet terminal within the inlet housing via a second fastener. The negative conductor terminal further is configured to be fused to a negative conductor.

The charging inlet of the preceding paragraph can optionally include, additionally and/or alternatively any, one or more of the following features/steps, configurations, and/or additional components.

For example, the positive and negative conductor terminals may be configured to be welded to the positive and negative conductors.

For example, the positive and negative conductors may be selected from a list consisting of solid bus bars and stranded wire cables.

For example, the positive and negative conductor terminals may be at least partially contained within an electrically insulative terminal housing.

For example, the terminal housing may include alignment features configured to cooperate with corresponding alignment features in the inlet housing to align the positive and negative conductor terminals with the positive and negative inlet terminals.

For example, the alignment features may be two or more posts extending from the terminal housing. The corresponding alignment features may be two or more sockets in the inlet housing in which the two or more posts may be received.

For example, the terminal housing may include locking features configured to secure the terminal housing to the inlet housing.

For example, the charging inlet may further include a retainer configured to secure the first and second fasteners to the terminal housing.

For example, the charging inlet may further include a seal within the retainer configured to provide environmental sealing between the first and second fasteners and the terminal housing.

For example, a ground terminal within the inlet housing may be interconnected to an electrically conductive feature in an inlet mounting plate attached to the inlet housing. The electrically conductive feature may be configured to attach the inlet mounting plate to a chassis of an electric vehicle.

For example, the ground terminal may be interconnected to the electrically conductive feature by a stranded wire cable.

For example, the ground terminal may be interconnected to the electrically conductive feature by a rigid bus bar.

For example, the positive and negative conductor terminals may be sized and arranged to provide a heat sink for the positive and negative inlet terminals.

For example, interfaces between the positive and negative conductor terminals and the positive and negative conductors may be contained within an electrically insulative overmolded sheath.

For example, the electrically insulative overmolded sheath may be formed by a low pressure hot melt material.

For example, interfaces between the positive and negative conductor terminals and the positive and negative conductors may be contained within sections of dual wall/adhesive heat shrink tubing.

For example, the inlet housing may be configured to accommodate positive and negative conductor terminals having a variety of different orientations relative to the inlet housing.

In some aspects, the techniques described herein relate to a charging inlet, including an inlet housing and a ground terminal within the inlet housing interconnected to an electrically conductive feature by a ground conductor. The electrically conductive feature is configured to be attached to a chassis ground.

The charging inlet of the preceding paragraph can optionally include, additionally and/or alternatively any, one or more of the following features/steps, configurations, and/or additional components.

For example, the charging inlet may further include an inlet mounting plate configured to mount the inlet housing to a chassis of an electric vehicle. The inlet mounting plate may contain the electrically conductive feature. The chassis ground may be provided by the chassis of the electric vehicle.

For example, the ground conductor is selected from a list consisting of a solid bus bar and a stranded wire cable.

## Claims

1. A charging inlet (100), comprising:
a positive conductor terminal (202) configured to interconnect with a positive inlet terminal (102) within an inlet housing (104) of the charging inlet (100) via a first fastener (116), the positive conductor terminal (202) further configured to be fused to a positive conductor (402); and
a negative conductor terminal (206) configured to interconnect with a negative inlet terminal (106) within the inlet housing (104) via a second fastener (118), the negative conductor terminal (206) further configured to be fused to a negative conductor (404).

2. The charging inlet (100) in accordance with claim 1, wherein the positive and negative conductor terminals (202, 204) are configured to be welded to the positive and negative conductors (402, 404).

3. The charging inlet (100) in accordance with claim 1 or 2, wherein the positive and negative conductors (402, 404) are selected from a list consisting of solid bus bars and stranded wire cables.

4. The charging inlet (100) in accordance with any one of the preceding claims, wherein the positive and negative conductor terminals (202, 204) are at least partially contained within an electrically insulative terminal housing (120).

5. The charging inlet (100) in accordance with claim 4, wherein the terminal housing (120) comprises alignment features (306) configured to cooperate with corresponding alignment features (602) in the inlet housing (104) to align the positive and negative conductor terminals (202, 204) with the positive and negative inlet terminals.

6. The charging inlet (100) in accordance with claim 5, wherein the alignment features (306) are two or more posts extending from the terminal housing (120) and wherein the corresponding alignment features (602) are two or more sockets in the inlet housing (104) in which the two or more posts are received.

7. The charging inlet (100) in accordance with claim 5 or 6, wherein the terminal housing (120) comprises locking features (604, 606) configured to secure the terminal housing (120) to the inlet housing (104).

8. The charging inlet (100) in accordance with any one of claims 4 to 7, further comprising a retainer configured to secure the first and second fasteners (116, 118) to the terminal housing (120).

9. The charging inlet (100) in accordance with claim 8, further comprising a seal within the retainer configured to provide environmental sealing between the first and second fasteners (116, 118) and the terminal housing (120).

10. The charging inlet (100) in accordance with any one of the preceding claims, wherein a ground terminal (108) within the inlet housing (104) is interconnected to an electrically conductive feature (110) in an inlet mounting plate (112) attached to the inlet housing (104) and wherein the electrically conductive feature (110) is configured to attach the inlet mounting plate (112) to a chassis of an electric vehicle.

11. The charging inlet (100) in accordance with any one of the preceding claims, wherein the positive and negative conductor terminals (202, 204) are sized and arranged to provide a heat sink for the positive and negative inlet terminals.

12. The charging inlet (100) in accordance with any one of the preceding claims, wherein interfaces between the positive and negative conductor terminals (202, 204) and the positive and negative conductors (402, 404) are contained within an electrically insulative overmolded sheath (406).

13. The charging inlet (100) in accordance with claim 12, wherein interfaces between the positive and negative conductor terminals (202, 204) and the positive and negative conductors (402, 404) are contained within sections of dual wall/adhesive heat shrink tubing (506).

14. A charging inlet (100), comprising:
an inlet housing (104); and
a ground terminal (108) within the inlet housing (104) interconnected to an electrically conductive feature (110) by a ground conductor, the electrically conductive feature (110) configured to be attached to a chassis ground.

15. The charging inlet (100) in accordance with claim 14, further comprising an inlet mounting plate (112) configured to mount the inlet housing (104) to a chassis of an electric vehicle, wherein the inlet mounting plate (112) contains the electrically conductive feature (110) and wherein the chassis ground is provided by the chassis of the electric vehicle.
